# EUROPÄISCHE PATENTSCHRIFT

(11) **EP 0 566 717 B1**
(45) Veröffentlichungstag und Bekanntmachung des Hinweises auf die Patenterteilung: **18.02.1998**
(21) Anmeldenummer: 92922855.9
(22) Anmeldetag: 02.11.1992
(51) Int. Cl.: G01N 27/333

(54) **MINIATURISIERTES SENSORELEMENT ZUR BESTIMMUNG VON STOFFKONZENTRATIONEN IN FLÜSSIGKEITEN UND VERFAHREN ZU SEINER HERSTELLUNG**
MINIATURIZED SENSOR ELEMENT FOR DETERMINING THE CONCENTRATIONS OF SUBSTANCES IN LIQUIDS AND PROCESS FOR PRODUCING THE SAME
CAPTEUR MINIATURISE POUR LA DETERMINATION DE CONCENTRATIONS DE SUBSTANCES DANS DES LIQUIDES ET PROCEDE DE FABRICATION DUDIT CAPTEUR

(30) Priorität: 13.11.1991 DE 4137261
(43) Veröffentlichungstag der Anmeldung: 27.10.1993
(73) Patentinhaber: KNOLL, Meinard, 48565 Steinfurt (DE)
(72) Erfinder: KNOLL, Meinard, 48565 Steinfurt (DE)
(74) Vertreter: Hoffmeister, Helmut, Dr. Dipl.-Phys.
(86) Internationale Anmeldenummer: EP9202505
(87) Internationale Veröffentlichungsnummer: WO9310443

(56) Entgegenhaltungen:
- EP-A- 0 264 804
- EP-A- 0 429 145
- WO-A-86/02732
- DE-A- 2 700 567
- US-A- 3 676 220
- PATENT ABSTRACTS OF JAPAN vol. 9, no. 112 (C-281)16. Mai 1985
- PATENT ABSTRACTS OF JAPAN vol. 7, no. 138 (P-204)(1283) 16. Juni 1983

## Beschreibung

Die Erfindung betrifft ein miniaturisiertes Sensorelement zur Bestimmung von Stoffkonzentrationen in Flüssigkeiten, bestehend aus
a) einem Membranträger, der Kavitäten besitzt, in denen eine Membran ausgebildet ist,
b) mit einer Membran, die durch Polymerisation oder Ausscheiden aus einer Lösung "in situ" hergestellt ist,
c) und mit einer elektrischen Ableitung, die mit dem Membranträger mechanisch verbunden oder integriert ist und die die Membran kontaktiert.

Die Erfindung betrifft außerdem ein Verfahren zur Herstellung eines derartigen Sensorelementes.

Miniaturisierte Sensorelemente mit ionenselektiven Membranen der vorgenannten Art lassen sich z. B. in der Medizintechnik zur Bestimmung von Blutelektrolyten und in der Umwelttechnik zum Nachweis von Schadstoffkonzentrationen im Trinkwasser einsetzen.

Es ist bekannt, miniaturisierte ionenselektive Elektroden (ISE) nach dem "coated-wire"-Prinzip herzustellen (vergl. P. Berveld, DEVELOPMENT AND APPLICATION OF CHEMICAL SENSORS IN LIQUIDS, Buch: SENSORS AND SENSORY SYSTEMS FOR ADVANCED ROBOTS, Springer Verlag Berlin, Heidelberg, 1988, Seite 403). Ein dünner Silberdraht wird mit einer ionenselektiven Polymermembran überzogen, die aus flüssiger Phase zum Beispiel durch Eintauchen des Drahtes in eine Membranlösung hergestellt wird.

Analog zum "coated-wire"-Prinzip lassen sich ionenselektive Elektroden auch nach dem "coated-film"-Prinzip herstellen (vergl. U. Lemke, K. Cammann: COATED FILM ELECTRODES, Fresenius Z. Anal. Chem. (1989) 335, Seite 852-854). Im einfachsten Fall bestehen diese Sensorelemente aus einem Kunststoffsubstrat, das einen dünnen Silberfilm trägt, der mit der ionenselektiven Polymermembran überzogen ist.

Auch die Herstellung solcher ionenselektiver Polymermembranen ist bekannt (vergl. Kundeninformation der Firma FLUKA Feinchemikalien GmbH, Neu-Ulm: "Selectophore - Ionophores for Ion-Selective Elektrodes"). Die Membran besteht z.B. aus einer PVC-Matrix, in der neben einem Weichmacher auch eine elektroaktive Substanz (Ionophor) enthalten ist, die die Ionenselektivität der Membran bestimmt. Das in einem Lösungsmittel (z.B. Tetrathydro-furan) gelöste Membranmaterial kann zum Gießen von Membranen verwendet werden, wobei sich das Lösungsmittel verflüchtigt und eine verfestigte Membran entsteht.

Etwas aufwendiger als die oben angegebenen Sensorelemente sind sogenannte Dünnfilm-Elektroden ausgestaltet (vergl. K. Cammann u.a.: CHEMO- UND BIOSENSOREN - GRUNDLAGEN UND ANWENDUNGEN, Zeitschrift: Angew. Chem. 103 (1991), Seite 519-541). Sie besitzen zwischen der beschriebenen Silberschicht und der ionenselektiven Polymermembran zusätzlich eine Silberchloridschicht sowie eine verfestigte Schicht mit einem Referenzelektrolyten zur Einstellung einer konstanten Potentialdifferenz zwischen Membran und Silberfilm.

Bei den genannten ionenselektiven Elektroden handelt es sich um Sensorelemente, an deren Phasengrenze zwischen Fleßlösung und ionenselektiver Membran sich eine Potentialänderung ausbildet, die von der Ionenaktivität der Meßlösung und damit von ihrer Ionenkonzentration abhängt. Diese Potentialänderung kann z.B. gegen eine Bezugselektrode mit konstantem Potential gemessen werden.

Mehrere ionenselektive Membranen lassen sich auf einem Träger zu einem Multisensor vereinen (vergl. Europäische Patentanmeldung: EP 0 302 228 A2).

Es ist darüber hinaus bekannt, ionenselektive Elektroden zu Biosensorelementen auszubauen. Dazu wird z.B. in der ionenselektiven Membran, an ihrer Oberfläche oder in bzw. auf einer weiteren Membran oder Gel-Schicht ein Enzym durch Adsorption, Geleinschluß, kovalente Kopplung oder Vernetzung immobilisiert. Mit Hilfe des Enzyms GOD können so z.B. potentiometrische Glucosesensoren hergestellt werden (verg. F. Scheller, F. Schubert: BIOSENSOREN, Akademie-Verlag Berlin (1989), Seite 89, sowie Seite 49 bis 52).

Nachteilig ist bei den bekannten Sensorelementen, daß entweder das Herstellungsverfahren, z. B. bei den Dünnfilmelektroden, sehr aufwendig ist, oder bei der Verwendung einfacher Gieß- bzw. Klebeverfahren für "coated-film"-Elektroden jedes Sensorelement einzeln entsteht und darum auch einzeln kalibriert werden muß.

Der Erfindung liegt deshalb die Aufgabe zugrunde, Sensorelemente für Chemo- und Biosensoren so auszugestalten, daß sie mit sehr einfachen und kostengünstigen Verfahren großflächig mit in der Fläche homogenen Sensoreigenschaften hergestellt werden können. Aus dem entstandenen Flächengebilde soll eine Vielzahl von Sensorelementen herstellbar sein, die alle annähernd die gleichen Sensoreigenschaften besitzen. Damit sollen die Kalibrierungsdaten von wenigen Sensorelementen auf alle Sensorelemente einer Charge übertragbar sein.

Diese Aufgabe wird erfindungsgemäß bei einem miniaturisierten Sensorelement gemäß Anspruch 1 gelöst.

Ein Membranträger wie im Anspruch 1 definiert, kann beispielsweise die Form einer Bahn oder eines Tuches haben, das durch Zerschneiden in einer rasterförmigen Anordnung oder durch Aus-stanzen in viele kleine Miniatur-Sensorelemente zerlegt werden kann. Voraussetzung für diese Herstellung ist die spezielle Gestaltung des einzelnen Sensorelementes.

Der mit der Lösung tränkbare Membranträger kann beispielsweise aus Normalfilterpapier, aus anderem Papier oder aus zellstoffhaltigen Vliesen bestehen. Es ist auch möglich, ein Kunstfaservlies, insbesondere aus sogenannten Mikrofasern, zu verwenden. Ahnliche Eigenschaften haben textile Gewebe und Gewirke, Metallgewebe, Metallvlies oder Schaummaterialien, die aus organischem oder anorganischem Material bestehen, beispielsweise Schaumglas, Kunststoffschäume und dergleichen. Der Membranträger stellt demnach eine mechanisch stützende Matrix dar, in der sich die gelartig verfestigte Membran befindet, die in den Kapillaren der Kapillarstruktur gehalten ist.

Um die Membran in üblicher Weise, beispielsweise mit einem Silber-Kontakt zu verbinden, wird vorgeschlagen, die Stützmatrix, vorzugsweise in der noch unzerschnittenen Form, mit einer leitenden Schicht der vorgenannten Art zu versehen. Diese Schicht kann beispielsweise eine aufgedampfte Silberschicht sein, so daß sich eine modifizierte "coated-film"-Elektrode ergibt.

In oder auf der Sensormembran, die sich in dem Kapillarkörper befindet, kann noch eine weitere Schicht, z. B. Gelschicht aufgebracht werden, die ein biologisch aktives Material, z. B. ein Enzym, immobilisiert enthält, so daß sich ein Biosensor damit realisieren läßt.

Wie bereits angedeutet, kann der Kapillarkörper aus Filterpapier, PTFE-Mikrofasergeflächt, Gewirken oder Geweben aus Kunstfasern, Glasfasern, Metalldraht, elektrisch leitfähigen Kunstfasern, metallisierten Kunstfasern sowie aus geschäumten Kunststoffschichten oder anderen Kapillaren aufweisenden Schichten bestehen. Die Körper müssen aufgrund der ihnen eigenen Kapillar- oder Grenzflächenkräfte Membranlösungen aufnehmen können und in der Fläche homogen verteilen können. Die Dicke der Kapillarkörper sollte zwischen 0,01 und 1 mm liegen.

Ein solcher Kapillarkörper läßt sich z. B. mit einer PVC-Membranlösung, wie sie für die Herstellung ionenselektiver Membrane üblich ist, tränken. Dazu wird die Membranlösung auf den Kapillarkörper aufgebracht, beispielsweise gegossen, gesprüht oder durch Tauchen. Nach Verflüchtigung des Lösungsmittels bildet sich in dem Kapillarkörper eine ionenselektive PVC-Membran aus, in der sich das selektivitätsbestimmende Ionophor befindet.

Es soll an dieser Stelle aber auch darauf hingewiesen werden, daß sich statt einer ionenselektiven PVC-Membran auch ionenselektive Membranen aus Silikon, Gummi, fotopolymerisierten Schichten, elektropolymerisierten Schichten und Gel-Schichten oder anderen Materialien herstellen lassen, die aus einer flüssiger Phase gebildet werden können.

Vor oder nach dem Tränken mit Membranlösung kann der Kapillarkörper auf einer Seite mit einem Silberfilm versehen und so zu einer "coated-film"-Elektrode ausgestaltet werden. Dies geschieht z. B. durch Aufdampfen im Vakuum, durch Siebdruck mit einer silberhaltigen Paste, durch Kleben mit einer rasterförmig aufgebrachten inerten Kleberschicht oder durch chemische Abscheidung.

Besonders interessant ist auch die Möglichkeit, daß anstelle des Silbcrkontaktes der Kapillarkörper an einer Oberfläche mit einem verfestigten Referenzelektrolyten kontaktierend versehen werden kann. Dies geschieht zum Beispiel dadurch, daß der Referenzelektrolyt seinerseits in einem Kapillarkörper als gelartige Schicht ausgebildet wird, die an einer Oberfläche mit der ionenselektiven Membran und an der anderen Oberfläche mit einer Silberchlorid/Silber-Ableitung versehen wird. Die Referenzelektrolytschicht kann zum Beispiel aus einer KCl-Salzlösung bestehen, die mit einem hochviskosen Mittel, wie Gelatine, Agar-Agar oder Polyvinylalkohol verfestigt ist. Weitere Merkmale von Unteransprüchen sind in der nachfolgenden Beschreibung erläutert.

Mit der Erfindung wird insbesondere der Vorteil erzielt, daß die besondere Ausgestaltung der herstellbaren Chemo- bzw. Biosensorelemente es erlaubt, daß auf einer großen Fläche, die homogene Sensoreigenschaften besitzt, durch Teilung oder Ausstanzen eine große Anzahl von Miniatur-Sensorelementen erzeugt wird, die alle annähernd gleiche Sensoreigenschaften besitzen. Die Homogenität der Eigenschaften der zu diesen Sensorelementen gehörenden Membranen Referenzelektrolytschichten ergibt sich aus der Homogenität der verwendeten Kapillarkörper. Es ist bekannt, die Grundmaterialien der Körper, also Gewebe, Papiere, Mikrofaservlies und dergleichen, mit sehr gleichbleibenden Eigenschaften, herzustellen.

Dabei sei darauf verwiesen, daß die Konstitution der Membran abgestimmt werden muß auf die Kapillargröße, Oberflächeneigenschaften und dergleichen der infrage kommenden Kapillarkörper. auch die Anwendungen müssen berücksichtigt werden, beispielsweise ob es sich um Messungen in der Atmosphäre, in vitro oder in vivo handelt.

Eine Reihe von Versuchen hat gezeigt, daß bei homogener Formation der Kapillarkörper sich auch gleichbleibende Schichteigenschaften für Membranen und Referenzelektrolytschichten ergeben. Diese Eigenschaften ergeben sich aus den bekannten Beschaffenheiten der Kapillarkörper sowie aus dem Volumen der aufgebrachten Membranen, Elektrolyt- oder Gel-Lösungen, die sich aufgrund der Kapillar- bzw. Grenzflächenkräfte innerhalb der Stützmatrix gleichmäßig verteilen.

Durch das Herstellungsverfahren, bei dem zunächst eine größere Fläche hergestellt und anschließend zerschnitten oder ausgestanzt wird, lassen sich die elektrochemischen Eigenschaften der gesamten Sensorelementstruktur großflächig konstant halten. Es lassen sich mit ausreichender Reproduzierbarkeit die an wenigen Miniatur-Sensorelementen gemessenen Werte auf die anderen Sensorelemente der Charge übertragen.

Weitere Erläuterungen erfolgen anhand der beigefügten Zeichnung. Die Figuren zeigen als Schnittdarstellungen im einzelnen:
- Fig. 1: Ausschnitt aus einer "coated-film"-Struktur mit Membran und großflächigem Metallkontakt;
- Fig. 2: eine ionenselektive Elektrode (ISE) mit Membran und flüssigem Ionenelektrolyt;
- Fig. 3: Ausschnitt aus einer "coated-film"-Struktur mit einzelnen Metallkontakten;
- Fig. 4: Ausschnitt aus einer "coated-film"-Struktur mit aufgeklebter Ableitung;
- Fig. 5: Ausschnitt aus einer Dünnfilmelektrode mit Membran;
- Fig. 6: Biosensorelement;
- Fig. 7 und Fig. 8: zwei Ausführungsformen von Sensorelementen auf Trägern.

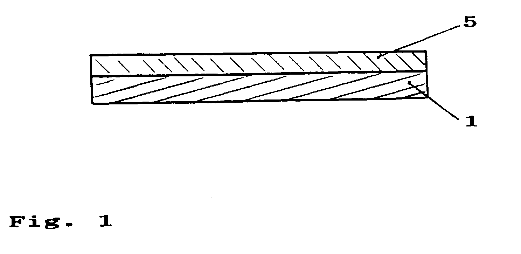

In Figur 1 ist ein miniaturisiertes Sensorelement schematisch dargestellt, das aus einem Membranträger 1 und einem dünnen Silberfilm 5, der mit dem Membranträger in direktem Kontakt steht, besteht. Der Membranträger 1 besteht im vorliegenden Falle aus einer etwa 1 mm starken Filterpapierschicht, hier Normalfilterpapier gemäß DIN 12448. Die Dicke des Silberfilms 5 ist gegenüber der Dicke des Membranträgers 1 übertrieben. Diese Schicht kann z. B. durch Aufdampfen im Vakuum oder durch Siebdruck mit einer Silberpaste und Temperung erzeugt werden. Aufgedampfte Schichten haben typische Dicken von 1 µm. Schichten, die durch Siebdruck erzeugt werden, weisen Dicken zwischen 1 und 100 µm auf.

Der Membranträger 1 wird mit einem geeigneten Membranmaterial getränkt, z. B. einer PVC-Membranlösung, das neben einem Weichmacher auch eine elektroaktive Substanz (Ionophor) enthält, die die Ionenselektivität der Membran bestimmt. Die Herstellung von geeigneten Lösungen für Flüssigmembranen, z. B. PVC-Membranen oder Silikongummi-Membranen, für die ISE-Technik ist an sich bekannt. Aus der Kundeninformation der Firma FLUKA Feinchemikalien GmbH, Neu-Ulm, mit dem Titel "Selectophore - Ionophores for ionselectives electrodes" sind Beispiele ersichtlich. Nach dem Verflüchtigen des Lösungsmittels entsteht im Kapillarkörper des Membranträgers "in situ" eine Membran, die innerhalb des Kapillarkörpers des Membranträgers gehalten ist. Die Ausdehnung des Sensorelementes gemäß Figur 1 ist bestimmt durch den Bedarf und den Anwendungszweck. Vorzugsweise wird aus einer großflächig hergestellten Bahn, beispielsweise des Formats 50 x 100 cm, eine große Anzahl von Miniatur-Sensorelementen ausgeschnitten oder ausgestanzt, etwa von der Größe 3 x 3 mm. Eine solche Konfiguration stellt demnach ein Sensorelement nach der modifizierten "coated-film"-Prinzip dar.

Wird ein Kapillarkörper verwendet, der elektrisch leitfähig ist, so ergibt sich der Vorteil, daß bei einer relativ großen Dicke des Kapillarkörpers ein relativ geringer elektrischer Membranwiderstand auftritt, da dieser im wesentlichen durch die Dicke des Membranmaterials bestimmt wird, das die elektrisch leitfähigen Fasern umhüllt.

Solche Kapillarkörper können aus Fasern bestehen, die durch Vakuumbedampfung oder galvanische Verfahren mit einem dünnen Metallfilm überzogen sind. Alternativ ist es auch möglich, Fasern zu verwenden, die elektrisch leitfähig sind und beispielsweise aus mit Ruß oder Metallpulver ausgereicherten Polyethylenfäden bestehen.

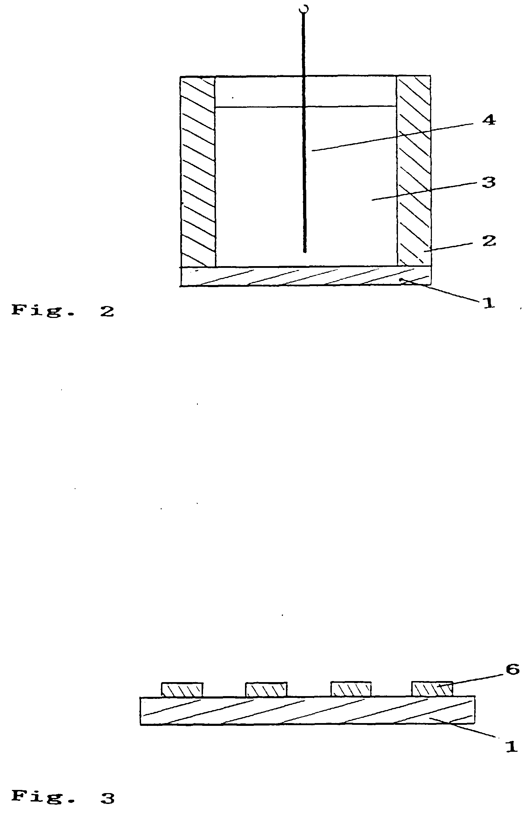

In Figur 2 ist dargestellt, wie ein Membranträger 1, der mit einer Membran getränkt ist, in einer "klassischen" Anwendung eingesetzt ist. Figur 2 zeigt eine konventionelle, ionenselektive Elektrode im Schnitt. Die ionenselektive Polymermembran, die üblicherweise am Ende eines zylindrischen Gefäßes 2 angebracht ist, ist durch einen Membranträger 1 mit Membran ersetzt worden. Das zylindrische Gefäß 2, das etwa einen Durchmesser von 3 - 5 mm hat, ist mit einer Referenzelektrolytlösung 3 gefüllt. In die Elektrolytlösung 3 taucht ein Silberdraht 4 ein, dessen Oberfläche chloridisiert ist.

Der Membranträger 1 ist im vorliegenden Falle aus einem PTFE-Mikrofasergeflecht hergestellt. Ein solches Material ist an sich bekannt. Die ionenselektive Membran, die in dem PTFE-Kapillarkörper des Membranträgers gehalten ist, wird beispielsweise durch Aufgießen oder durch Aufsprühen einer PVC-Membranlösung der bereits beschriebenen Art eingebracht, wobei sie nach Verdunsten des Lösungsmittels die Membran ergibt. Der Membranträger mit der Membran kann beispielsweise auf das Ende des Ohres 2, das vorzugsweise aus Kunststoff besteht, aufgeklebt werden. Mit Vorteil läßt sich demnach der nach dem Verfahren hergestellte Membranträger 1 auch zum Bau konventioneller ionenselektiver Elektroden verwenden.

Eine andere Art des Kontaktierens ist in Figur 3 dargestellt. Hier ist der ganzflächige Silberkontakt der "coated-film"-Elektrode durch einzelne Kontaktflächen 6 ersetzt, die beispielsweise einen Durchmesser von 3 mm haben und jeweils etwas kleiner sind als die auszuschneidende oder auszustanzende Fläche eines Miniatur-Sensorelementes. Die kleinen Kontakte werden z. B. beim Aufdampfen im Vakuum mit Hilfe einer Schattenmaske oder durch Siebdruck erzeugt.

Die ionenselektive Membran wird hier beispielsweise im Kapillarkörper 1 dadurch hergestellt, daß dieser zunächst mit der Membranflüssigkeit getränkt wird und anschließend z.B. durch Fotopolymerisation unter UV-Licht die verfestigte Membran entsteht.

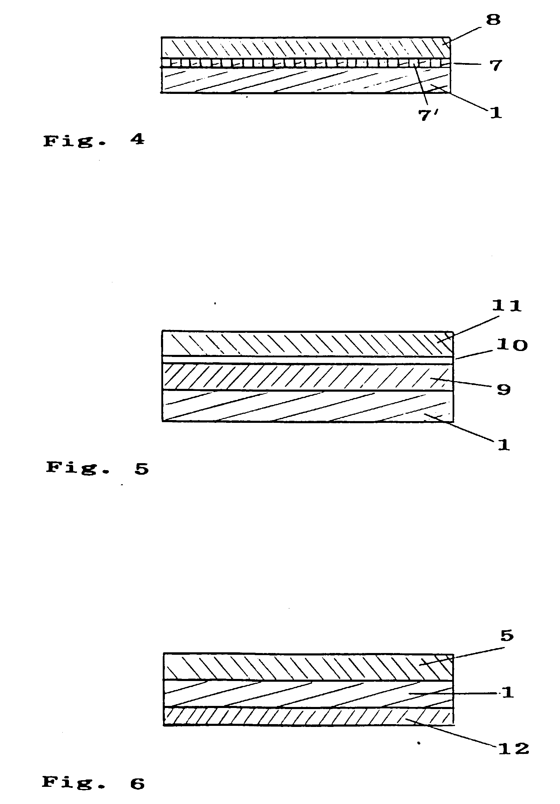

Figur 4 zeigt eine weitere Ausführung eines miniaturisierten Sensorelementes nach einem modifizierten "coated-film"-Prinzip. Zunächst wird ein Membranträger mit Membran hergestellt, die durch Ausscheiden aus einer Lösung in dem Kapillarkörper "in situ" produziert worden ist. Anschließend wird eine inerte Kleberschicht 7 so aufgebracht, daß rasterförmig Durchlässe 7' vorhanden sind, in die ein Silberfilm 8 eindringt, der vollflächig aufgeklebt ist, und der in den Durchlässen mit der Membran im Membranträger 1 Kontakt hat. Anstelle eines Silberfilms kann auch ein anderes, äquivalentes elektrisch leitfähiges Material aufgeklebt werden. Diese Ausführung ist vorteilhaft, weil sich ein mechanisch stabiles, leicht herstellbares Gebilde ergibt.

In Figur 5 ist ein miniaturisiertes Sensorelement mit einem Referenzelektrolyten dargestellt. Zunächst wird in der bereits beschriebenen Weise ein mit Membran versehener Membranträger 1 hergestellt. Als Membranträger wird beispielsweise ein Kunststoff-Vlies verwendet. Aus dem gleichen Material, vorzugsweise einstückig, ist eine Schicht 9, die mit einem verfestigten Referenzelektrolyten 9 versehen ist, vorgesehen. Diese Schicht kann auch getrennt angefertigt werden und durch Aufgießen oder Aufsprühen des Referenzelektrolyten, z. B. KCl in Polyvinylalkohol hergestellt werden. Nach dem Verfestigen des zum Tränken verwendeten Materials ergibt sich die innere Referenzelektrolytschicht 9.

Vor dem Einbringen des Referenzelektrolyten wird das Material des Kapillarkörpers 9 auf seiner Oberfläche mit einem Silber-Sliberchlorid-Kontakt versehen. Dies geschieht im vorliegenden Falle durch schichtweises Bedampfen im Vakuum mit einer Silberchloridschicht 10 und einer Silberschicht 11. Andere Methoden sind chemische Abscheidung oder Aufdampfen einer Silberschicht, die an der Grenzfläche zur Stützmatrix elektrolytisch chloridisiert wird. Hierzu wird die Stützmatrix nach dem Bedampfen mit Silber zunächst mit einer geeigneten chloridisierenden Flüssigkeit getränkt, die nach dem Erzeugen der AgCl-Schicht wieder ausgewaschen wird. Soweit die beiden Kapillarkörper 1 und 9 nicht einstückig sind, können sie verbunden werden, indem vor dem Aufbringen der Referenzelektrolytlösung der Kapillarkörper 9 auf den Membranträger 1 aufgebracht und zwischen zwei Sieben so lange eingespannt wird, bis die Referenzelektrolytschicht getrocknet oder verfestigt ist.

Eine weitere vorteilhafte Möglichkeit ist die Herstellung von sogenannten Biosensoren. Wie bereits in der Beschreibungseinleitung erläutert, sind derartige Biosensorelemente bereits bekannt. Sie lassen sich aus den hier beanspruchten miniaturisierten Sensorelementen dadurch herstellen, indem gemäß Figur 6 der Membranträger 1, der an seiner Oberfläche mit einem Silberkontakt 5 versehen ist, an seiner anderen Oberfläche eine Enzymschicht 12 oder eine Membran mit anderem biologisch aktivem Material trägt, wie sie für einen Biosensor erforderlich ist.

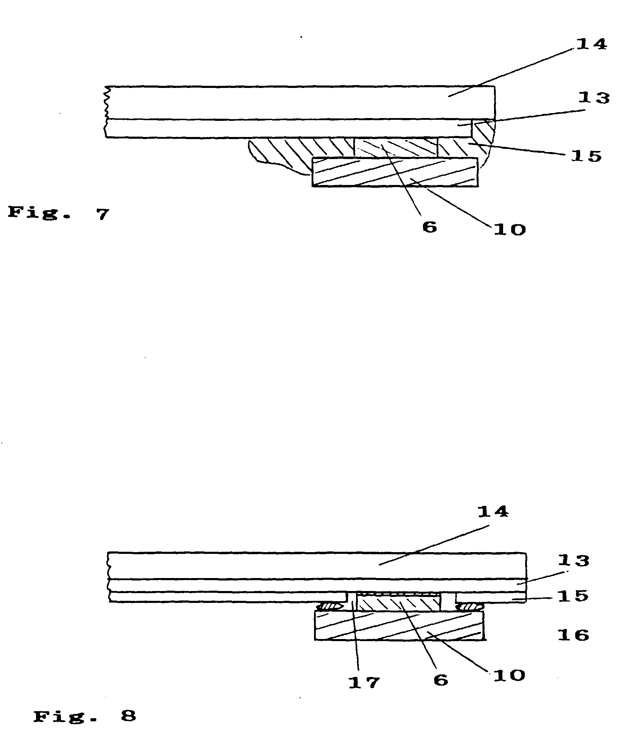

In den Figuren 7 und 8 schließlich sind Möglichkeiten der Anbringung und der Montage von miniaturisierten Sensorelementen dargestellt. Nachdem zunächst eine größere Fläche einer homogen in einem Membranträger eingenisteten Membran erzeugt ist, werden einzelne Plättchen durch Zerschneiden erzeugt, die Miniatur-Sensorelemente aus Membranträger 10 und Kontaktfläche 6 ergeben. Hierbei wird beispielsweise ein großflächiges Gebilde gemäß Figur 3 entsprechend zerschnitten oder ausgestanzt. Die Kontaktfläche 6 wird an einem Träger dadurch gefestigt, daß eine Kunststoffzunge 14, beispielsweise aus Polyethylen, auf ihrer Unterseite mit einer Metallschicht 13 versehen ist, auf die wiederum mit Hilfe eines Silberleitklebers die Kontaktfläche 6 aufgeklebt wird. Dieses hält dann an seiner Unterseite das Miniatur-Sensorelement 10. Um zu verhindern, daß die Meßflüssigkeit in den Kontaktbereich zwischen Kontaktfläche 6 und Metallschicht 13 eindringt, ist eine die Unterseite des Miniatur-Sensorelementes 10 freilassende Versiegelung aus Silikonharz 15 um die Kontaktfläche 6 herum angebracht.

Der Träger 14 kann auf seiner Länge bzw. seiner Flächenausdehnung mehrere derartige Metallschichten 13 und Miniatur-Sensorelemente 10 tragen, so daß ein Multi-Sensorelement realisiert werden kann. Trägersubstanzen für die Kunststoffzunge 14 können auch andere Kunststoffe, wie beispielsweise PTFE oder Polykarbonat sein.

Figur 8 zeigt ein gegenüber der Figur 7 geändertes Ausführungsbeispiel für einen mit Miniatur-Sensorelementen 10 bestückten Träger 14. Auf dem Träger 14 befindet sich wiederum eine Metallschicht 13. Die Metallschicht 13 ist mit einer Isolationsschicht 15 überzogen, die eine Offnung 17 aufweist. In diese Offnung wird das Kontaktplättchen 6 eingelassen und eingeklebt. Hierzu wird wiederum ein Silberleitkleber verwendet. Das Miniatur-sensorelement wird kragenartig mit einem Silikonharz 16 verklebt, so daß die Kontaktstelle des Plättchens 6 mit der Metallschicht 13 gegen Flüssigkeitszutritt geschützt ist.

An dieser Stelle sei angemerkt, daß die vorbeschriebene, in erster Linie für ISE-Membranen geeignete Technik sich auch dazu eignet, andere Materialien zu verwenden, die einen gewünschten elektrochemischen Sensoreffekt bewirken. Solche Materialien können z. B. Gele oder flüssige Ionenaustauscher sein.

## Patentansprüche

1. Miniaturisiertes Sensorelement zur Bestimmung von Stoffkonzentrationen, bestehend aus
- einer Membran, die durch Polymerisation oder Ausscheiden aus einer Lösung gebildet wird,
- einem Träger, in dem eine Membran angeordnet ist,
- und einer elektrischen Ableitung, die mit der Membran verbunden oder in sie integriert ist, dadurch gekennzeichnet,
- daß der Träger ein Kapillarkörper ist, dessen Kapillaren die Membranflüssigkeit aufnehmen,
- daß der Kapillarkörper mit der in den Kapillaren angeordneten Membran als ein Membranträger (1, 10) und
- daß die elektrische Ableitung auf einer der Seitenflächen des Membranträgers (1, 10) als wenigstens ein leitender Streifen (5, 6, 8, 11) oder als Silberdraht (4) ausgebildet ist.

2. Miniaturisiertes Sensorelement nach Anspruch 1, dadurch gekennzeichnet, daß der Kapillarkörper des Membranträgers (1) aus Normalfilterpapier oder zellstoffhaltigen Vliesen besteht.

3. Miniaturisiertes Sensorelement nach Anspruch 1, dadurch gekennzeichnet, daß der Kapillarkörper des Membranträgers (1) aus einem Kunststoffaser-Vlies, insbesondere aus sogenannten Mikrofasern, besteht.

4. Miniaturisiertes Sensorelement nach Anspruch 1, dadurch gekennzeichnet, daß der Kapillarkörper des Membranträgers (1) aus einem textilen Gewebe oder Gewirke besteht.

5. Miniaturisiertes Sensorelement nach Anspruch 1, dadurch gekennzeichnet, daß der Kapillarkörper des Membranträgers (1) aus einem Metallgewebe oder -vlies besteht.

6. Miniaturisiertes Sensorelement nach Anspruch 1, dadurch gekennzeichnet, daß der Kapillarkörper des Membranträgers (1) aus organischem oder anorganischem Schaummaterial besteht.

7. Miniaturisiertes Sensorelement nach einem der Ansprüche 1 bis 6, dadurch gekennzeichnet, daß die Fasern des Membranträgers mit einem als leitende Schicht ausgebildeten Streifen, insbesondere mit einer aufgedampften oder durch Siebdruck aufgebrachten Silberschicht (5), versehen sind, die als Kontaktfläche dient.

8. Miniaturisiertes Sensorelement nach einem der vorhergehenden Ansprüche 1 bis 4 oder 6, dadurch gekennzeichnet, daß das Material des Kapillarkörpers des Membranträgers (1) durch Zumischung von leitfähigen Substanzen, insbesondere Ruß oder Metallpulver, leitfähig gemacht ist.

9. Miniaturisiertes Sensorelement nach einem der vorhergehenden Ansprüche, dadurch gekennzeichnet, daß der Membranträger (1) als flächiges, vorzugsweise bahnförmiges Material gestaltet ist.

10. Miniaturisiertes Sensorelement nach einem der vorhergehenden Ansprüche, dadurch gekennzeichnet, daß der leitende Streifen (5, 6, 8, 11) als eine durchgehende leitende Schicht auf wenigstens einer Flachseite des Membranträgers (1) aufgebracht ist.

11. Miniaturisiertes Sensorelement nach einem der vorhergehenden Ansprüche, dadurch gekennzeichnet, daß als einzelne Kontaktflächen (6) ausgebildete Streifen auf wenigstens einer Flachseite des Membranträgers (1) aufgebracht sind.

12. Miniaturisiertes Sensorelement nach einem der vorhergehenden Ansprüche, als Teil eines Biosensorelementes, dadurch gekennzeichnet, daß der Membranträger (1) auf einer Seite mit einer Enzymschicht (12) oder mit einem anderen biologisch aktiven Material versehen ist.

13. Miniaturisiertes Sensorelement nach einem der vorhergehenden Ansprüche, mit einem Referenzelektrolyten, dadurch gekennzeichnet, daß ein Kapillarkörper (9) mit einem Elektrolyten als Referenz versehen wird, der an der einen Oberfläche mit einem entsprechenden Membranträger (1) mit ionenselektiver Membran und an der anderen Oberfläche mit einer Silber-/Silberchlorid-Ableitung (11, 11') verbunden ist.

14. Verfahren zur Herstellung von trägermontierten Sensorelementen nach einem der Ansprüche 1 bis 13, dadurch gekennzeichnet, daß ein Miniatur-Sensorelement (10) aus einem größeren Bahnabschnitt eines getränkten Membranträgers (1) durch Schneiden oder Stanzen gewonnen wird, dieses auf eine einer Metallschicht (13) kontaktierend befestigt und anschließend der Kontaktbereich versiegelt wird.

15. Verfahren nach Anspruch 14, dadurch gekennzeichnet, daß die Metallschicht (13) mit einer Kontaktfensteröffnungen (17) aufweisenden Isolationsschicht (15) überzogen wird und daß in diese die Kontaktplättchen (6) jeweils mit Miniatur-Sensorelementen (10) eingelegt und kontaktierend befestigt werden.

16. Verfahren nach Anspruch 14 oder 15, dadurch gekennzeichnet, daß die Befestigung der Miniatur-Sensorelemente (10) mit Hilfe eines Leitklebers, z. B. eines Silber-Leitklebers, erfolgt.

17. Verfahren zur Herstellung von Miniatur-Sensorelementen nach wenigstens einem der Ansprüche 14 bis 16, dadurch gekennzeichnet, daß ein Membranträger (1) mit Membran mit einer inerten Kleberschicht (7) beschichtet wird, in der rasterförmig Durchlässe (7') verblieben sind, und daß ein Silberfilm oder ein äquivalentes, elektrisch leitfähiges Material vollflächig so aufgebracht wird, daß dieses im Bereich der Durchlässe (7') mit der Membran im Membranträger (1) Kontakt hat.

## Claims

1. A miniaturised sensor element for determining substance concentrations, consisting of
- a membrane formed by polymerisation or separation from a solution,
- a support in which a membrane is disposed,
- and an electrical outlet lead connected to or integrated in the membrane, characterised in that
- the support is a capillary body whose capillaries receive the membrane liquid,
- in that the capillary body with the membrane disposed in the capillaries is constructed as a membrane support (1, 10) and
- in that the electrical outlet lead on one of the side surfaces of the membrane support (1, 10) is constructed in the form of at least one conductive strip (5, 6, 8, 11) or in the form of a silver wire (4).

2. A miniaturised sensor element according to claim 1, characterised in that the capillary body of the membrane support (1) consists of normal filter paper or cellulose-containing fleeces.

3. A miniaturised sensor element according to claim 1, characterised in that the capillary body of the membrane support (1) consists of a plastic fibre fleece, more particularly "micro-fibres".

4. A miniaturised sensor element according to claim 1, characterised in that the capillary body of the membrane support (1) consists of a textile woven or knitted fabric.

5. A miniaturised sensor element according to claim 1, characterised in that the capillary body of the membrane support (1) consists of a metal woven fabric or fleece.

6. A miniaturised sensor element according to claim 1, characterised in that the capillary body of the membrane support (1) consists of organic or inorganic foam material.

7. A miniaturised sensor element according to any one of claims 1 to 6, characterised in that the fibres of the membrane support are provided with a strip constructed as a conductive coating, more particularly a silver coating (5) applied by vapour-coating or by screen printing.

8. A miniaturised sensor element according to any one of the preceding claims 1 to 4 or 6, characterised in that the material of the capillary body of the membrane support (1) is rendered conductive by the addition of conductive substances, more particularly carbon black or metal powder.

9. A miniaturised sensor according to any one of the preceding claims, characterised in that the membrane support (1) is in the form of a flat material, preferably in the form of a web.

10. A miniaturised sensor element according to any one of the preceding claims, characterised in that the conductive strip (5, 6, 8, 11) is applied in the form of a continuous conductive coating to at least one flat side of the membrane support (1).

11. A miniaturised sensor element according to any one of the preceding claims, characterised in that strips constructed in the form of individual contact surfaces (6) are applied to at least one flat side of the membrane support (1).

12. A miniaturised sensor element according to any one of the preceding claims, as part of a biosensor element, characterised in that the membrane support (1) is provided on one side with an enzyme coating (12) or with another biologically active material.

13. A miniaturised sensor element according to any one of the preceding claims, with a reference electrolyte, characterised in that a capillary body (9) is provided with an electrolyte as reference, which on one surface is connected to a corresponding membrane support (1) with an ion-selective membrane and on the other surface is connected to a silver/silver chloride outlet lead (11, 11').

14. A method of producing support-mounted sensor elements according to any one of claims 1 to 13, characterised in that a miniature sensor element (10) is obtained from a portion of a larger web of an impregnated membrane support (1) by cutting or stamping, is fixed so as to make contact on a metal coating (13), and then the contact zone is sealed.

15. A method according to claim 14, characterised in that the metal coating (13) is covered by an insulating coating (15) having contact window openings (17) and in that the contact wafers (6) each with miniature sensor elements (10) are placed and contactingly fixed therein.

16. A method according to claim 14 or 15, characterised in that the fixing of the miniature sensor elements (10) is effected by means of a conductive adhesive, e.g. a silver conductive adhesive.

17. A method of producing miniature sensor elements according to at least any one of claims 14 to 16, characterised in that a membrane support (1) with a membrane is coated with an inert adhesive coating (7), in which passages (7') are left in the form of a grid, and in that a silver film or an equivalent electrically conductive material is so applied over the full surface that it has contact with the membrane in the membrane support (1) in the region of the passages (7').

## Revendications

1. Capteur miniaturisé pour la détermination de concentrations de substances, qui se compose:
- d'une membrane qui est formée par polymérisation ou par dépôt à partir d'une solution,
- d'un support dans lequel une membrane est agencée,
- et d'un branchement électrique qui est relié à la membrane et/ou y est intégré,
caractérisé
en ce que le support est un corps capillaire dont les capillaires reçoivent le liquide de membrane,
en ce que le corps capillaire, incluant la membrane agencée dans les capillaires, est réalisé sous forme de support (1, 10) de membrane,
et en ce que le branchement électrique est réalisé, sur une première des surfaces latérales du support (1, 10) de membrane, sous forme d'au moins une bande conductrice (5, 6, 8, 11) ou sous forme de fil d'argent (4).

2. Capteur miniaturisé selon la revendication 1, caractérisé en ce que le corps capillaire du support (1) de membrane se compose de papier filtre normal ou de non-tissé contenant de la cellulose.

3. Capteur miniaturisé selon la revendication 1, caractérisé en ce que le corps capillaire du support (1) de membrane se compose d'un non-tissé de fibres de matière plastique, en particulier de ce que l'on appelle des microfibres.

4. Capteur miniaturisé selon la revendication 1, caractérisé en ce que le corps capillaire du support (1) de membrane se compose d'un tissu, ou d'un tissu à mailles, textile.

5. Capteur miniaturisé selon la revendication 1, caractérisé en ce que le corps capillaire du support (1) de membrane se compose d'un tissu ou d'un non-tissé métallique.

6. Capteur miniaturisé selon la revendication 1, caractérisé en ce que le corps capillaire du support (1) de membrane se compose d'un produit alvéolaire organique ou inorganique.

7. Capteur miniaturisé selon l'une des revendications 1 à 6, caractérisé en ce que les fibres du support de membrane sont pourvues d'une bande qui sert de couche de contact et est réalisée sous forme de couche conductrice, en particulier sous forme de couche d'argent (5) déposée en phase vapeur ou par sérigraphie.

8. Capteur miniaturisé selon l'une des revendications précédentes 1 à 4 ou 6, caractérisé en ce que la matière du corps capillaire du support (1) de membrane est rendue conductrice en y mélangeant des substances conductrices, en particulier du noir de carbone ou une poudre métallique.

9. Capteur miniaturisé selon l'une des revendications précédentes, caractérisé en ce que le support (1) de membrane est configuré sous forme d'une matière plate, de préférence sous forme d'une matière en bande.

10. Capteur miniaturisé selon une des revendications précédentes, caractérisé en ce que la bande conductrice (5, 6, 8, 11) est appliquée sous forme d'une couche conductrice continue sur au moins un côté plat du support (1) de membrane.

11. Capteur miniaturisé selon l'une des revendications précédentes, caractérisée en ce que des bandes réalisées sous forme de surfaces individuelles (6) de contact sont appliquées sur au moins un côté plat du support (1) de membrane.

12. Capteur miniaturisé selon l'une des revendications précédentes, faisant partie d'un bio-capteur, caractérisé en ce que le support (1) de membrane est pourvu, sur l'un de ses côtés, d'une couche d'enzyme (12) ou d'une autre matière biologiquement active.

13. Capteur miniaturisé selon l'une des revendications précédentes, pourvu d'un électrolyte de référence, caractérisé en ce qu'un corps capillaire (9) est pourvu d'un électrolyte en tant que référence, qui est relié, à ladite première surface, à un support correspondant (1) de membrane à membrane ioniquement sélective, et relié à l'autre surface à un raccordement argent/chlorure d'argent (11, 11').

14. Procédé de fabrication de capteurs, montés sur supports, selon l'une des revendications 1 à 13, caractérisé en ce que en ce qu'un capteur miniature (10) est obtenu par découpe ou estampage d'une partie plus grande de feuille continue d'un support (1) de membrane imprégné, en ce que ce capteur miniature est fixé sur une couche métallique (13) en établissant un contact et que la zone du contact est ensuite scellée.

15. Procédé selon la revendication 14, caractérisé en ce que la couche métallique (13) est revêtue d'une couche isolante (15), présentant des ouvertures (17) de fenêtres de contact, et en ce que les plaquettes (6) de contact respectivement pourvues de capteurs miniatures (10) y sont insérées et fixées en établissant un contact.

16. Procédé selon la revendication 14 ou 15, caractérisé en ce que la fixation des capteurs miniatures (10) est réalisée à l'aide d'un adhésif conducteur, par exemple un adhésif conducteur à l'argent.

17. Procédé de fabrication de capteurs miniatures selon l'une au moins des revendications 14 à 16, caractérisé en ce qu'un support (1) de membrane pourvu d'une membrane est revêtu d'une couche d'adhésif inerte dans laquelle subsistent des passages (17) en forme de réseau, et en ce qu'un film d'argent ou une matière électriquement conductrice équivalente est déposé sur toute la surface d'une manière telle que cette matière est, dans la zone des passages (7'), au contact de la membrane incluse dans le support (1) de membrane.
